# EUROPEAN PATENT SPECIFICATION

(11) **EP 1 418 710 B1**
(45) Date of publication and mention of the grant of the patent: **18.04.2007**
(21) Application number: 03025385.0
(22) Date of filing: 04.11.2003
(51) Int. Cl.: H04L 12/28

(54) **Radio communication system and radio station suitably used for the same**
Funkkommunikationssystem und dafür geeignete Funkstation
Système de radiocommunication et station radio utilisable pour le mème

(30) Priority: 05.11.2002 JP 2002321836
(43) Date of publication of application: 12.05.2004
(73) Proprietor: NTT DoCoMo, Inc., Tokyo 100-6150 (JP)
(72) Inventor: Moon, Sung Uk, Int. Prop. Dept., 2-11-1, Nagatacho Chiyoda-ku Tokyo (JP); Nakamura, Takehiro, Int. Prop. Dept., 2-11-1, Nagatacho Chiyoda-ku Tokyo (JP); Ishii, Minami, Int. Prop. Dept., 2-11-1, Nagatacho Chiyoda-ku Tokyo (JP); Usuda, Masafumi, Int. Prop. Dept., 2-11-1, Nagatacho Chiyoda-ku Tokyo (JP)
(74) Representative: HOFFMANN EITLE

(56) References cited:
- US-A- 5 541 955
- US-B1- 6 360 076
- ZHAO SONGSHENG ET AL: "Dynamic quality of session control of real-time video multicast" INTELLIGENT PROCESSING SYSTEMS, 1997. ICIPS '97. 1997 IEEE INTERNATIONAL CONFERENCE ON BEIJING, CHINA 28-31 OCT. 1997, NEW YORK, NY, USA,IEEE, US, 28 October 1997 (1997-10-28), pages 1737-1741, XP010276324 ISBN: 0-7803-4253-4

## Description

This application is based upon and claims the benefit of priority from the prior Japanese Patent Application No. P2002-321836, filed on November 5, 2003.

### BACKGROUND OF THE INVENTION

### 1. Field of the Invention

The present invention relates to a radio communication system whereby one or a plurality of base stations transmit common information to a plurality of mobile stations, a radio station (a base station or a radio network controller) suitably used for the same.

### 2. Description of the Related Art

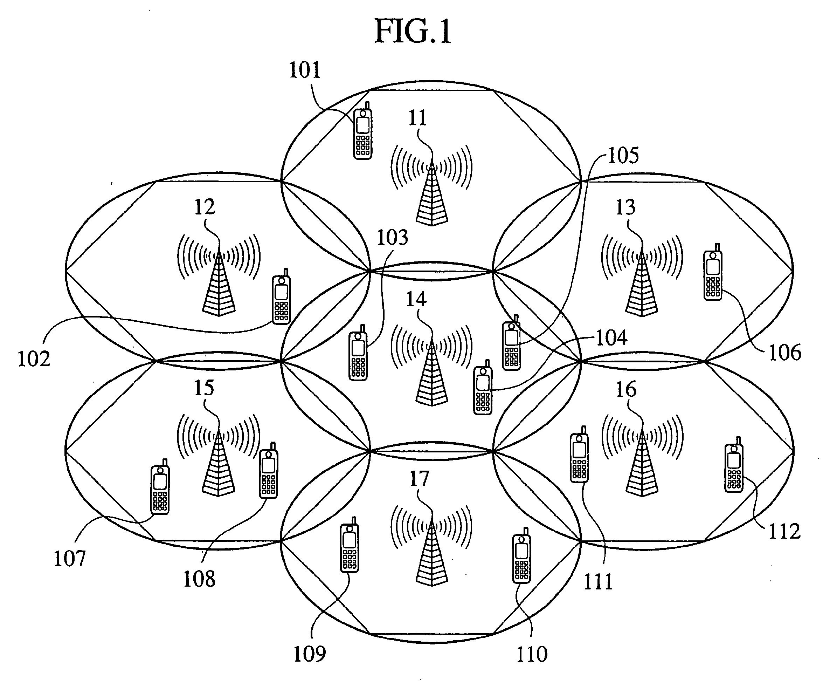

As shown in FIG. 1, broadcast communication whereby a plurality of base stations 11 to 17 transmit common information to unspecified mobile stations 101 to 112 in predetermined areas is known in a conventional radio communication system.

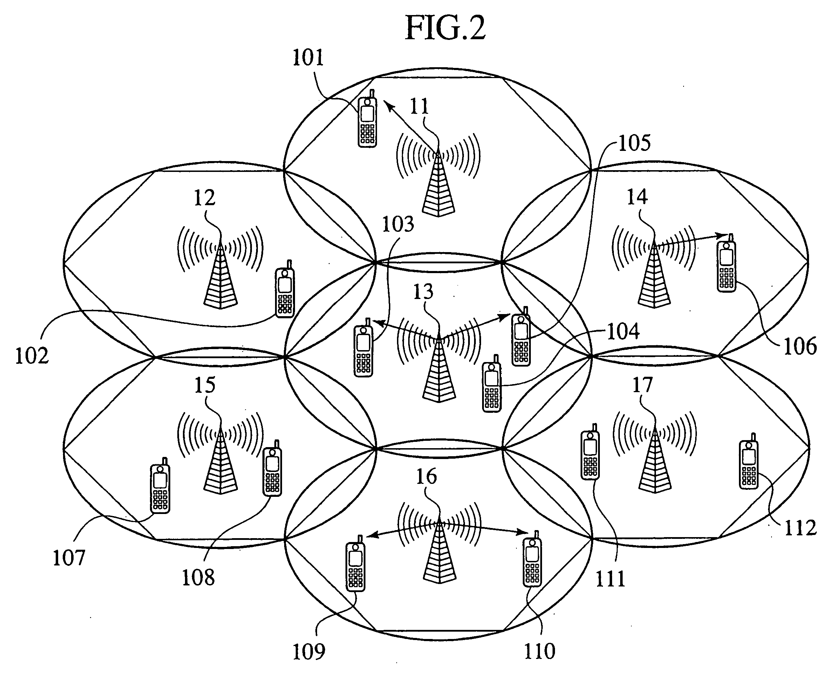

As shown in FIG. 2, multicast communication whereby a plurality of base stations 11 to 17 transmit common information to specific mobile stations joining in (belonging to) a specific group is known in a conventional radio communication system.

A method of transmitting and receiving information which is organized hierarchically by a modulation method and so on, and a method of organizing information hierarchically by transmission power, the numbers of codes, importance and so on, in the above radio communication system.

However, there is a problem in that a mobile station which is not equipped with a specific reception ability cannot receive information which requires a specific reception ability to be received, when a plurality of mobile stations joining in a multicast group have various reception abilities, and when a base station transmits common information without consideration of reception abilities of the mobile stations.

There is a problem in that a mobile station cannot make the most of a highly developed reception ability upon receiving specific type of information.

US-A-6,360,076 discloses a multicast quality procedure having the following step. The system operator first specifies TQmin, the minimum bandwidth required for the type of data to be transmitted in the multicast. The operator may determine TQmin from statistical data for the cell collected from regular point-to-point cellular transmissions of the same type of data to be transmitted in the multicast. TQmax is then specified. Test packets are then broadcast on the broadcast channel utilizing a method which assumes ideal downlink conditions. The test packets identify TQmin and TQmax, and mobile terminals which receive the test packets with a transmission quality (tq) in the range of TQmin to TQmax are instructed to respond.

All mobile terminals receiving the broadcast with a tq less than TQmax start sending responses to the base station. The responses included the received tq and the mobile terminal class. GPRS has different classes of mobile terminals, therefore, the multicast may be going to mobile terminals having different capabilities. The present invention enables the operator to take advantage of these classes when broadcasting a multicast. The mobile terminal class is indicated in the response, and identifies whether the responding mobile terminal is multi-slotted, and the reception capability of the responding mobile terminal.

Once a response has been received with a reported tq greater than or equal to TQmin, the system instructs the remaining mobile terminals to stop responding. The intent is to receive one acknowledgment from the first eligible mobile terminal that has received the test packets successfully. When this acknowledgment is received, it implies that an acceptable transmission quality has been achieved. This result is then re-broadcast in the cell to prevent any more responses from other mobile terminals, thereby reducing the load on the network.

The method then determines the bandwidth that can be supported by the mobile terminal and the air interface at 42. Finally transmission of the multicast is begun.

### BRIEF SUMMARY OF THE INVENTION

In viewing of the foregoing, it is an object of the present invention to provide a radio communication system which can make the most of a reception ability and radio resources of a mobile station, by determining information to be transmitted in consideration of the reception ability of the mobile station, when a base station performs multicast communication.

According to the present invention, there is provided a Radio station as defined in the appended independent claim 1. Preferred embodiments are defined in the dependent claims.

### BRIEF DESCRIPTION OF THE SEVERAL VIEWS OF THE DRAWINGS

FIG. 1 is a diagram for explaining broadcast communication according to the prior art.
FIG. 2 is a diagram for explaining multicast communication according to the prior art.
FIG. 3 is a diagram showing the entire configuration of a radio communication system according to embodiments of the present invention.
FIG. 4 is a functional block diagram of a radio station suitably used for the radio communication system according to the first embodiment.
FIG. 5 is a flow chart illustrating the operation of the radio station suitably used for the radio communication system according to a first embodiment.
FIG. 6 is a functional block diagram of a radio station suitably used for the radiocommunication system according to a second embodiment.
FIG. 7 is a flow chart illustrating the operation of the radio station suitably used for the radio communication system according to the second embodiment.
FIG. 8 is a functional block diagram of a radio station suitably used for the radio communication system according to a third embodiment.
FIG. 9 is a flow chart illustrating the operation of the radio station suitably used for the radio communication system according to the third embodiment.

### DETAILED DESCRIPTION OF THE INVENTION

A first aspect is summarized as a radio station such as a base station and a radio network controller for performing multicast communication. The radio station comprises a reception ability value collector configured to collect a reception ability value of a mobile station joining in a specific multicast group; a transmission method determiner configured to determine a transmission method of transmitting information in accordance with the collected reception ability value; a transmitter configured to transmit the information to the mobile station using the determined transmission method and a radio resource manager configured to manage available radio resources. The transmission method determiner determines the transmission method in accordance with the reception ability value and the available radio resources, so that a mobile station joining in the specific multicast group being equipped with a lowest reception ability can receive the information using the determined transmission method.

The reception ability value may be defined by at least one of a demodulation method, a reception buffer size, a computing processing ability, an error correction method and an interleaving length.

The transmission method may be determined by at least one of a modulation method, transmission power, a method of organizing the information hierarchically, the amount of data, the numbers of codes, an error correction method, the numbers of blocks, an interleaving length and a rate matching method.

The radio resource may be defined by at least one of transmission power, the numbers of codes, the numbers of frequencies and propagation conditions.

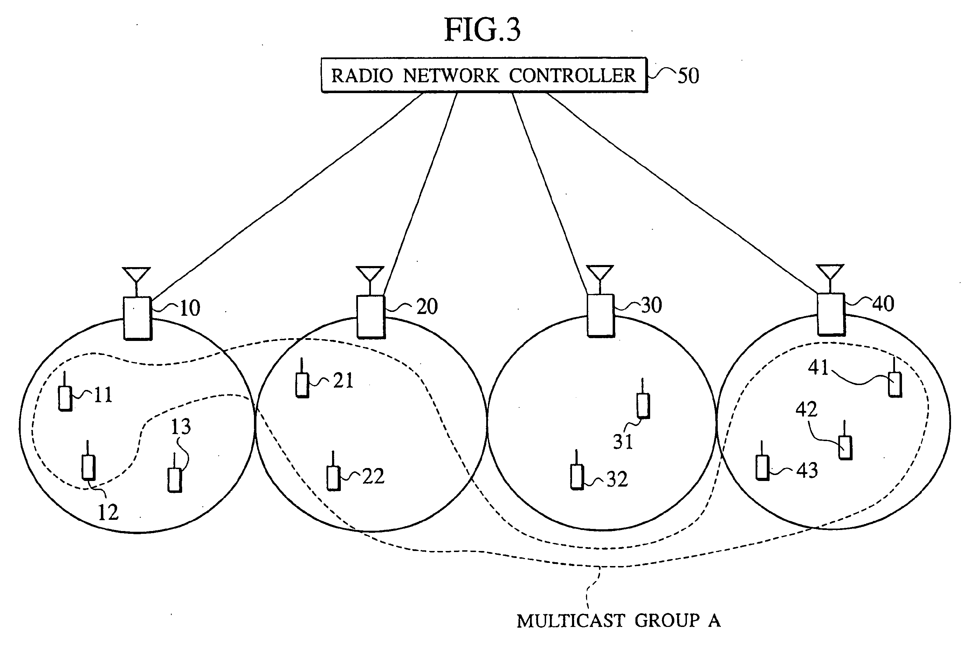

FIG. 3 shows the entire configuration of a radio communication system according to embodiments of the present invention.

As shown in FIG. 3, the radio communication system according to the first embodiment comprises four base stations 10, 20, 30 and 40 under a radio network controller 50.

In the radio communication system according to the embodiments, the base station 10 manages mobile stations 11 to 13, the base station 20 manages mobile stations 21 and 22, the base station 30 manages mobile stations 31 and 32, and the base station 40 manages mobile stations 41 to 43. The mobile stations 11, 12, 21, 41, 42 and 43 join in (belong to) a multicast group A in the embodiment.

In the embodiments, functions of a radio station are installed in a radio network controller 50 or a plurality of base stations 10 to 30.

### <A configuration of a radio communication system according to a first embodiment of the present invention>

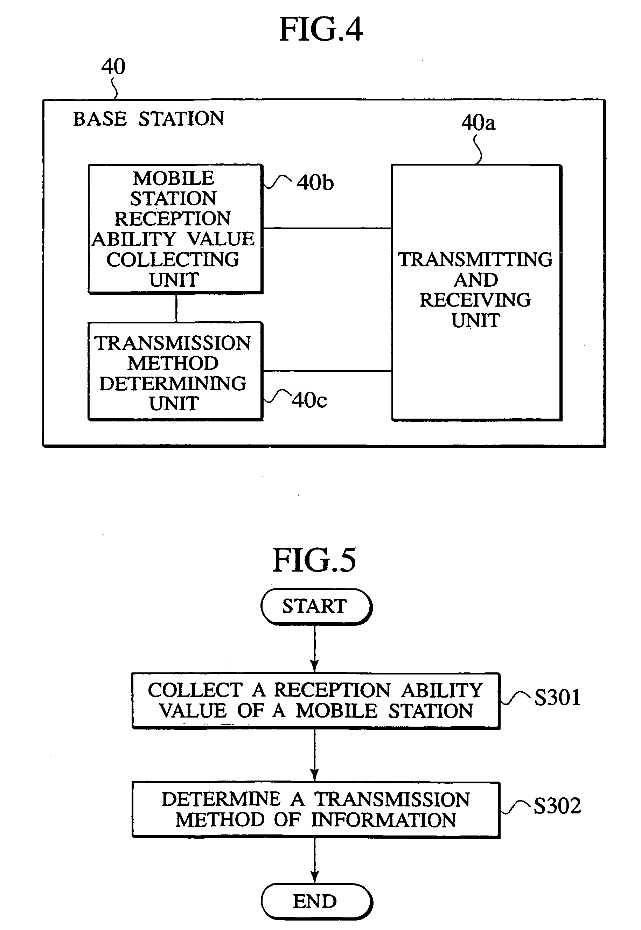

FIG. 4 shows functional blocks of a base station installed with the functions of the radio station suitably used for the radio communication system according to the first embodiment. Functions of a plurality of base stations 10 to 40 are basically the same, so that the functions of the base station 40 will be explained as follows.

As shown in FIG. 4, the base station 40 is configured with a transmitting and receiving unit 40a, a mobile station reception ability value collecting unit 40b and a transmission method determining unit 40c.

The transmitting and receiving unit 40a is configured to receive signals transmitted from the mobile stations 41 to 43, and signals transmitted from other radio stations (for example, the radio network controller 50 and base stations 10 to 30).

The transmitting and receiving unit 40a is configured to transmit information to the mobile stations 41, 42 and 43 joining in the multicast group A, using a determined transmission method determined by the transmission method determining unit 40c.

The transmitting and receiving unit 40a transmits predetermined information to other radio stations (for example, the radio network controller 50 and base stations 10 to 30).

The mobile station reception ability value collecting unit 40b is configured to collect a reception ability value of each of the mobile stations 41, 42 and 43 joining in the multicast group A, based on signals received by the transmitting and receiving unit 40a.

For example, the mobile station reception ability value collecting unit 40b collects "Class 1" as a reception ability value of the mobile station 41, "Class 2" as a reception ability value of the mobile station 42 and "Class 3" as a reception ability value of the mobile station 43.

The transmission method determining unit 40c is configured to determine a transmission method of transmitting information to be transmitted to the mobile station, in accordance with the collected reception ability value "Class 1", "Class 2" or "Class 3".

To be more specific, the transmission method determining unit 40c determines the transmission method, so that a mobile station equipped with a predetermined reception ability of "Class 1", "Class 2" or "Class 3" can receive the information using the determined transmission method.

The reception ability value of the mobile station is defined by at least one of a demodulation method which the mobile station can use, a reception buffer size of the mobile station, a computing processing ability of the mobile station, an error correction method which the mobile station uses, an interleaving length which the mobile station uses and so on.

The computing processing ability is defined by the numbers of bits or codes which a processor of the mobile station can process per one operation, a computing method, a computing speed and so on.

The demodulation method considered as the reception ability includes the QPSK (Quadrature Phase Shift Keying), the 8PSK, the 16QAM (Quadrature Amplitude Modulation), 64QAM and so on.

For example, the reception ability of the mobile station 41 can demodulate signals modulated with the QPSK, the 8PSK and the 16QAM, the reception ability of the mobile station 42 can demodulate signals modulated with the QPSK and the 8PSK, the reception ability of the mobile station 43 can demodulate signals modulated with the only QPSK, in the first embodiment.

In this case, the only mobile station 41 can demodulate information which the transmitting and receiving unit 40a of the base station 40 modulated and transmitted with the 16QAM. On the other hand, the mobile stations 41, 42 and 43 can demodulate information which the transmitting and receiving unit 40a of the base station 40 modulated and transmitted with the QPSK.

An example whereby the reception buffer size (memory size) is adopted as the reception ability value will be described as follows.

For example, it is assumed that the reception buffer size of the mobile station 41 is "10M bytes", the reception buffer size of the mobile station 42 is "5M bytes", and the reception buffer size of the mobile station 43 is "1M bytes".

In this case, the mobile stations 41, 42 and 43 cannot receive more than 10M bytes of information transmitted by the transmitting and receiving unit 40a of the base station 40.

An example whereby the computing processing ability is adopted as the reception ability value will be described as follows.

In this case, when the transmitting and receiving unit 40a of the base station 40 transmits information to the mobile station which cannot process more than 1M bytes per one operation, using a transmission method requiring more than 1M bytes of computing processing per one operation.

In this case, when the transmitting and receiving unit 40a of the base station 40 transmits information multiplied with 4 codes to the mobile station 41 which can process a maximum of 10 codes per one operation, the mobile station 42 which can process a maximum of 5 codes per one operation, the mobile station 43 which can process a maximum of 3 codes per one operation, the mobile station 43 cannot perform a reception processing of the information.

In this case, when the transmitting and receiving unit 40a of the base station 40 transmits information to the mobile station which does not support a computing method as a RAKE receiving function, using a transmission method requiring the computing method as a RAKE receiving function, the mobile station cannot perform a reception processing of the information.

In this case, when the transmitting and receiving unit 40a of the base station 40 transmits information to the mobile station, using a transmission method imposing a load more than an computing speed at which a mobile station can process, the mobile station cannot perform a reception processing of the information.

An example whereby the error correction method is adopted as the reception ability value will be described as follows. The error correction method considered as the reception ability includes the collapse codes, the Turbo codes and so on.

In this case, when the transmitting and receiving unit 40a of the base station 40 transmits information to the mobile station which does not support the collapse codes, using the error correction method with the collapse codes, the mobile station cannot perform an error correction processing.

An example whereby the interleaving length is adopted as the reception ability value will be described as follows. For example, it is assumed that a mobile station can be configured to deinterleave information interleaved with 320ms, 160ms, 80ms or 10ms.

In this case, when the transmitting and receiving unit 40a of the base station 40 transmits information interleaved with 320ms to the mobile station which does not support a interleaving length of 320ms, the mobile station cannot perform deinterleave the information.

The transmission method determining unit 40o can adopt a combination of a plurality of items such as the demodulation method, the reception buffer size, the computing processing ability, the error correction method and the interleaving length.

The transmission method is determined by at least one of a modulation method, transmission power, a method of organizing the information hierarchically, the amount of data, the numbers of codes, an error correction method, the numbers of blocks, an interleaving length and a rate matching method and so on.

The method of organizing the information hierarchically means a method of transmitting and receiving the information organized hierarchically by a modulation method, transmission power, the numbers of codes, the numbers of blocks, importance and so on.

The transmission method determining unit 40c can adopt a combination of a plurality of items such as a modulation method, transmission power, a method of organizing the information hierarchically, the amount of data, the numbers of codes, an error correction method, the numbers of blocks, an interleaving length and a rate matching method.

### <An operation of the radio communication system according to the first embodiment>

Referring to FIG. 5, the operation of the radio communication system according to the first embodiment will be described.

As shown in FIG. 5, in step 301, the mobile station reception ability value collecting unit 40b collects the reception ability values of the mobile stations 41, 42 and 43 joining in the multicast group A in accordance with the signal received by the transmitting and receiving unit 40a.

In step 302, the transmission method determining unit 40c determines the transmission method of transmitting information to the mobile stations 41, 42 and 43, in accordance with the collected reception ability values. Then the transmitting and receiving unit 40a transmits the information to the mobile stations 41, 42 and 43 using the determined transmission method.

### <A configuration of a radio communication system according to a second embodiment of the present invention>

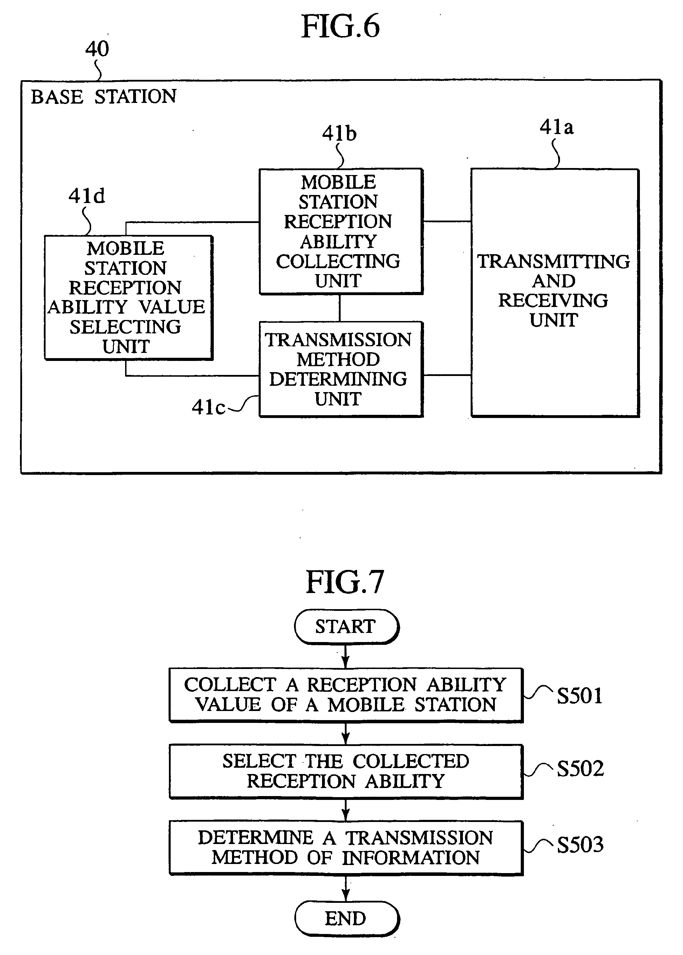

FIG. 6 shows functional blocks of a base station installed with the functions of the radio station suitably used for the radio communication system according to the second embodiment. Functions of a plurality of base stations 10 to 40 are basically the same, so that the functions of the base station 40 will be explained as follows.

The base station 40 according to the second embodiment is configured with a mobile station reception ability selecting unit 41d, in addition to the functions of the base station according to the first embodiment. A transmitting and receiving unit 41a, a mobile station reception ability value collecting unit 41b and a transmission method determining unit 41c have same functions as the transmitting and receiving unit 40a, the mobile station reception ability value collecting unit 40b and the transmission method determining unit 40c in the radio communication system according to the first embodiment respectively.

The transmission method determining unit 41c is configured to determine a transmission method whereby the mobile station equipped with a reception ability selected by the mobile station reception ability selecting unit 41d can receive the information transmitted from the transmitting and receiving unit 41a.

The mobile station reception ability selecting unit 41d is configured to select the reception ability of the mobile station to which the information is transmitted, from among the reception abilities collected by the mobile station reception ability collecting unit 41b.

For example, when the reception ability of the mobile station 41 is "Class 1", the reception ability of the mobile station 42 is "Class 2" and the reception ability of the mobile station 43 is "Class 3", the mobile station reception ability selecting unit 41d can select all reception abilities, such as "Class 1", "Class 2" and "Class 3", with which the mobile stations can be equipped as the reception ability.

The mobile station reception ability selecting unit 41d can select a predetermined reception ability such as "Class 1" and "Class 2" as the reception ability of the mobile station to which the information is transmitted.

When "Class 1" means a more intelligent function than "Class 2" and "Class 2" means a more intelligent function than "Class 3", the mobile station reception ability selecting unit 41d can select the worst reception ability of "Class 3" as the reception ability of the mobile station to which the information is transmitted.

In this case, all mobile stations equipped with the reception ability of more than "Class 3" can receive the information.

The mobile station reception ability selecting unit 41d can select the best reception ability of "Class 1" as the reception ability of the mobile station to which the information is transmitted. In this case, mobile stations equipped with the reception ability of less than "Class 1" cannot receive the information.

### <An operation of the radio communication system according to the second embodiment>

Referring to FIG. 7, the operation of the radio communication system according to the second embodiment will be described.

As shown in FIG. 7, in step 501, the mobile station reception ability value collecting unit 41b collects the reception ability values of the mobile stations 41, 42 and 43 joining in the multicast group A in accordance with the signal received by the transmitting and receiving unit 41a.

In step 502, the mobile station reception ability selecting unit 42d selects the reception ability of the mobile station to which the information is transmitted, from among the collected reception ability values.

In step the station equipped with the reception ability selected by the mobile station reception ability selecting unit 41d can receive the information. Then the transmitting and receiving unit 41a transmit the information to the mobile station using the determined transmission method.

### <A configuration of a radio communication system according to a third embodiment of the present invention>

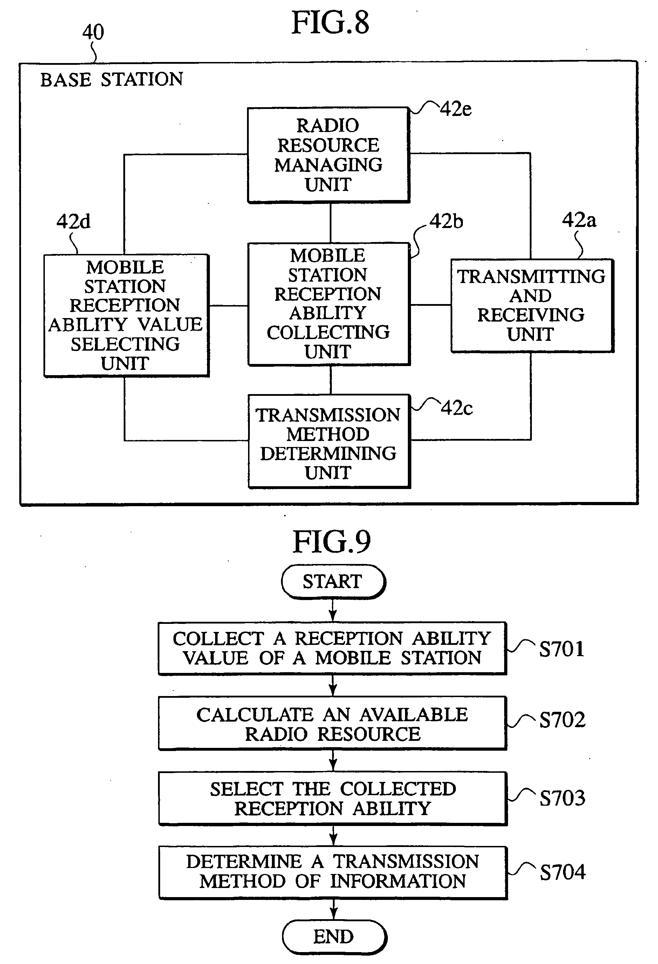

FIG. 8 shows functional blocks of a base station installed with the functions of the radio station suitably used for the radio communication system according to the third embodiment. Functions of a plurality of base stations 10 to 40 are basically the same, so that the functions of the base station 40 will be explained as follows.

The base station 40 according to the third embodiment is configured with a radio resource managing unit 42e, in addition to the functions of the base station according to the second embodiment. A transmitting and receiving unit 42a, a mobile station reception ability value collecting unit 42b, a transmission method determining unit 42c and a mobile station reception ability selecting unit 42d have same functions as the transmitting and receiving unit 41a, the mobile station reception ability value collecting unit 41b, the transmission method determining unit 41c and the mobile station reception ability selecting unit 41d in the radio communication system according to the second embodiment respectively.

The radio resource managing unit 42e is configured to manage available radio resources. To be more specific, the radio resource managing unit 42e manages all radio resources, radio resources in active use and available radio resources in the base station 40. The radio resource is defined by at least one of transmission power, the numbers of codes, the numbers of frequencies and propagation conditions and so on.

The transmission method determining unit 42c is configured to determine the transmission method, in accordance with the reception ability selected by the mobile station reception ability selecting unit 42d and the available radio resources.

To be more specific, the transmission method determining unit 42c compares the reception ability selected by the mobile station reception ability selecting unit 42d with the available radio resources managed by the radio resource managing unit 42e, and selects the transmission method based on the result of the comparison.

For example, when the amount of all radio resources is "100" and the amount of radio resources in active use is "50" in the base station 40, the amount of available radio resources is "50".

For example, it is assumed that the transmission method T whereby the mobile station equipped with the reception ability of "Class 1" can receive the information requires the amount of radio resources whose value is "80", the transmission method S whereby the mobile station equipped with the reception ability of "Class 2" can receive the information requires the amount of radio resources whose value is "40", and the transmission method R whereby the mobile station equipped with the reception ability of "Class 3" can receive the information requires the amount of radio resources whose value is "20°.

In this case, the transmission method determining unit 42c cannot select the transmission method T, so as to select the transmission method R and S, in consideration of the available radio resources.

An example whereby the transmission power is adopted as the radio resource will be described as follows.

In this case, when the maximum of transmission power is 20W and the transmission power in active use is 10W in the base station 40, the available transmission power is 10W in the base station 40, so that the transmission method determining unit 42c cannot select the transmission method requiring the transmission power of more than 10W.

As in the case of the numbers of codes or frequencies being adopted as the radio resources, the transmission method determining unit 42c cannot select the transmission method requiring the codes or the frequencies more than the available codes or frequencies in the base station 40.

### <An operation of the radio communication system according to the third embodiment>

Referring to FIG. 9, the operation of the radio communication system according to the third embodiment will be described.

As shown in FIG. 9, in step 701, the mobile station reception ability value collecting unit 42b collects the reception ability values of the mobile stations 41, 42 and 43 joining in the multicast group A in accordance with the signal received by the transmitting and receiving unit 42a.

In step 702, the radio resource managing unit 42e calculates the available radio resources in the base station 40.

In step 703, the mobile station reception ability selecting unit 42d selects the reception ability of the mobile station to which the information is transmitted, from among the collected reception ability valuess.

In step 704, the transmission method determining unit 42c determines the transmission method whereby the mobile station equipped with the reception ability selected by the mobile station reception ability selecting unit 42d can receive the information, in accordance with the available radio resources calculated by the radio resource managing unit 42e. Then the transmitting and receiving unit 42a transmit the information to the mobile station using the determined transmission method.

### <Functions and effects of the radio communication system according to the above embodiments>

The radio communication system according to the above embodiments can make the most of reception abilities and radio resources of mobile stations 41 to 43, by determining transmission methods of transmitting information based on the reception abilities of the mobile stations 41 to 43 in the radio communication system whereby a base station 40 supporting broadcast communication and multicast communication transmits the information to the mobile stations 41 to 43.

The present invention can provide a radio communication system which can make the most of reception abilities and radio resources of mobile stations, by determining transmission methods of transmitting information based on the reception abilities of the mobile stations when the base station performs multicast communication, and a radio station which can be used in the above radio communication system

Additional advantages and modifications will readily occur to those skilled in the art. Therefore, the invention is not limited to the specific details and the representative embodiment shown and described herein. Accordingly, various modifications may be made without departing from the scope of the invention as defined by the appended claims.

## Claims

1. A radio station **characterised by** comprising:
a reception ability value collector (42b) for collecting a reception ability value of each of the mobile stations (41, 42, 43) joining in a specific multicast group (A);
a transmission method determiner (42c) for determining a transmission method of transmitting information in accordance with the collected reception ability values;
a transmitter (42a) for transmitting the information to the mobile stations using the determined transmission method; and
a radio resource manager (42e) for managing available radio resources;
and wherein the transmission method determiner (42c) is configured to determine the transmission method in accordance with the reception ability values and the available radio resources, so that a mobile station joining in the specific multicast group being equipped with a lowest reception ability can receive the information using the determined transmission method.

2. The radio station according to any one of claim 1, wherein the reception ability value is defined by at least one of a demodulation method, a reception buffer size, a computing processing ability, an error correction method and an interleaving length.

3. The radio station according to any one of claims 1 and 2, wherein the transmission method is determined by at least one of a modulation method, transmission power, a method of organizing the information hierarchically, the amount of data, the numbers of codes, an error correction method, the numbers of blocks, an interleaving length and a rate matching method.

4. The radio station according to any one of claims 1 to 3, wherein the radio resource is defined by at least one of transmission power, the numbers of codes, the numbers of frequencies and propagation conditions.

## Patentansprüche

1. Funkstation **dadurch gekennzeichnet, dass** diese umfasst:
einen Empfangsfähigkeitswert-Sammler (42b) zum Sammeln eines Empfangsfähigkeitswertes jeder der mobilen Stationen (41, 42, 43), die an einer bestimmten Multicast-Gruppe (A) teilnimmt;
einen Übertragungsverfahren-Bestimmer (42c) zum Bestimmen eines Übertragungsverfahrens des Information-Übertragens gemäß den Empfangsfähigkeitswerten;
einen Sender (42) zum Übertragen der Information an die mobilen Stationen unter Verwendung des bestimmten Übertragungsverfahrens; und
einen Funkressourcen-Verwalter zum Verwalten verfügbarer Funkressourcen;
und wobei der Übertragungsverfahren-Bestimmer (42c) konfiguriert ist, das Übertragungsverfahren gemäß den Empfangsfähigkeitswerten und den verfügbaren Funkressourcen zu bestimmen, so dass eine mobile Station, die an der bestimmten Multicast-Gruppe teilnimmt, die mit einer niedrigsten Empfangsfähigkeit ausgestattet ist, die Information unter Verwendung des bestimmten Übertragungsverfahrens empfangen kann.

2. Funkstation nach Anspruch 1, wobei der Empfangsfähigkeitswert durch zumindest ein Demodulationsverfahren, eine Empfangspuffergroße, eine Berechnungsverarbeitungsfähigkeit, ein Fehlerkorrekturverfahren und eine Verschachtelungslänge definiert wird.

3. Funkstation nach einem der Ansprüche 1 und 2, wobei das Übertragungsverfahren durch zumindest ein Modulationsverfahren, eine Übertragungsleistung, ein Verfahren zum hierarchischen Organisieren der Information, die Datenmenge, die Anzahl von Codes, ein Fehlerkorrekturverfahren, die Anzahl von Blöcken, eine Verschachtelungslänge und ein Ratenanpassungsverfahren bestimmt wird.

4. Funkstation nach einem der Ansprüche 1 bis 3, wobei die Funkressource durch zumindest eine Übertragungsleistung, die Anzahl von Codes, die Anzahl von Frequenzen und der Ausbreitungsbedingungen definiert wird.

## Revendications

1. Station radio, **caractérisée en ce qu'**elle comprend :
un collecteur de valeurs d'aptitude à la réception (42b) pour collecter une valeur d'aptitude à la réception de chacune des stations mobiles (41, 42, 43) se joignant à un groupe multidestinataire spécifique (A) ;
une unité de détermination de procédé de transmission (42c) pour déterminer un procédé de transmission pour la transmission d'informations en fonction des valeurs collectées d'aptitude à la réception ;
une unité d'émission (42a) pour transmettre les informations aux stations mobiles, en utilisant le procédé déterminé de transmission ; et
une unité de gestion de ressources radio (42e) pour gérer des ressources radio disponibles ;
et dans laquelle l'unité de détermination de procédé de transmission (42c) est configurée pour déterminer le procédé de transmission en fonction des valeurs d'aptitude à la réception et des ressources radio disponibles, de telle manière qu'une station mobile, se joignant au groupe multidestinataire spécifique, étant équipé d'une aptitude à la réception la plus faible, puisse recevoir les informations en utilisant le procédé déterminé de transmission.

2. Station radio selon la revendication 1, dans laquelle la valeur d'aptitude à la réception est définie par au moins l'un d'un procédé de démodulation, d'une taille de mémoire tampon de réception, d'une aptitude au traitement informatique, d'un procédé de correction d'erreurs, et d'une longueur d'entrelacement.

3. Station radio selon la revendication 1 ou 2, dans laquelle le procédé de transmission est déterminé par au moins l'un d'un procédé de modulation, d'une puissance d'émission, d'un procédé d'organisation hiérarchique des informations, de la quantité de données, des numéros de codes, d'un procédé de correction d'erreurs, du nombre de blocs, d'une longueur d'entrelacement, et d'un procédé d'adaptation de débit.

4. Station radio selon l'une quelconque des revendication 1 à 3, dans laquelle la ressource radio est définie par au moins l'un de la puissance d'émission, des numéros de codes, des nombres de fréquences et des conditions de propagation.
